# EUROPEAN PATENT SPECIFICATION

(11) **EP 0 460 164 B1**
(45) Date of publication and mention of the grant of the patent: **23.11.1994**
(21) Application number: 91901413.4
(22) Date of filing: 20.12.1990
(51) Int. Cl.: C01B 15/037, C11D 3/39

(54) **STABILISATION OF HYDROGEN PEROXIDE SOLUTIONS**
STABILISIERUNG VON WASSERSTOFFPEROXYDLÖSUNGEN
STABILISATION DE SOLUTIONS DE PEROXYDE D'HYDROGENE

(30) Priority: 23.12.1989 GB 8929182
(43) Date of publication of application: 11.12.1991
(73) Proprietor: SOLVAY INTEROX LIMITED, Warrington, Cheshire WA4 6HB (GB)
(72) Inventor: MORRIS, Gareth, Wilmot, Wirral Merseyside L63 9YG (GB); FEASEY, Neil, David, Widnes Cheshire WA8 7PJ (GB); CROFTS, Rhona, Dorothy, Warrington Cheshire WA5 5UT (GB); MILLER, David, John, Warrington Cheshire WA5 5AS (GB); CHALKLEY, Neville, John, Warrington Cheshire WA6 8EA (GB)
(74) Representative: Pearce, Timothy
(86) International application number: GB9001987
(87) International publication number: WO9109807

(56) References cited:
- GB-A- 2 072 643
- US-A- 4 294 575

## Description

The present invention relates to a process for stabilizing aqueous alkaline solutions of hydrogen peroxide and to the resultant solutions having improved stability.

For many years, one of the standard items in most homes has been a general purpose bleach and disinfectant, normally in liquid form and at a ready to use concentration. The product most commonly available comprised a dilute aqueous alkaline solution of sodium hypochlorite, as such, or in a thickened but still pourable form. Such products found widespread use in cleansing toilets, pipework, drains, sinks and other surfaces where potentially harmful microorganisms could congregate. In more recent times, attention of potential users of general purpose bleaches has been focussed upon the potentially harmful effects in the environment arising from the discharge of chlorinaceous effluent and the potential for the generation of chlorinated byproducts that are possibly carcinogenic from interaction between compounds containing active chlorine, such as alkaline hypochlorite, and cellulosic materials, amongst others. As a result of such customer awareness there has been a tendency for them to shun the use of chlorinaceous bleaches and disinfectants, but the need remains for a product to carry out the bleach and disinfectant functions.

Self-evidently, one way of circumventing the problems associated with the use of active chlorinaceous compounds comprises the location of an alternative bleach and disinfectant system. However, any alternative system in practice proposed for domestic use needs to remain viable despite the inherent delays between manufacture of the bleach-disinfectant composition and its use. These delays can include storage by the manufacturer and during distribution through the wholesale and retail network, and storage by the domestic customer before and during use. Accordingly, the storage stability of the composition is a characteristic of great importance.

It is known already that aqueous solutions of hydrogen peroxide can act as a bleach, especially in alkaline conditions, and as a disinfectant. Such an alternative system is potentially very attractive, because it avoids the introduction of chlorinaceous species into the environment and the creation of chlorinaceous byproducts. Moreover, if it is discharged into the enviroment, its presence enhances the concentration of oxygen in the waters, thereby helping to meet the biological and/or chemical demand and mitigating the effect of pollutants. Its own decomposition products are oxygen and water, thereby reinforcing its beneficial effects. However, the storage stability of hydrogen peroxide solutions becomes increasingly impaired when they are rendered increasingly alkaline. Decomposition of hydrogen peroxide can yield two undesirable results. In the first, an acceptable product strength may not be maintained during normal shelf lifetimes and in the second, there is a possibility of undue pressure building up in its container if its design did not allow adequate venting. In consequence, it is necessary for such solutions to contain one or more substances that retard the rate of decomposition of the hydrogen peroxide during storage, and these are called stabilisers, herein.

The art of stabilization of aqueous alkaline solutions of hyrogen peroxide has not yet reached the ultimate and possibly inaccessible goal of suppressing decomposition completely, so that there is still a benefit to be obtained from locating more effective stabilisers or methods of improving the effectiveness of known stabilisers. The problem of decomposition of hydrogen peroxide has been studied for many years, and in the course of those studies, one of the most effective classes of stabilisers located so far comprises aliphatic amines that are N-substituted by alkylene phosphonate, especially methylene phosphonate groups. The stabilizing quality of a number of such compounds in alkaline solution has been extolled in patent and textile/bleach literature. For example, the merits of ethylenediaminetetramethylene phosphonic acid and soluble salts thereof were disclosed in USP 3 701 825 (now lapsed) and those of diethylenepentamethylene phosphonic acid by Monsanto in their trade brochure "Dequest" 2060 for Stabilization of Hydrogen Peroxide in Cellulosic Bleaching Processes and Unilever in EP-A-0 009 389. The latter disclosure gave a ranking under their trial conditions of many representatives of this class of stabilisers for alkaline peroxidic solutions of 5-10% strength intended for domestic use.

There is usually more than one method of producing even an apparantly simple solution. In the course of looking for ways of producing stabilized low strength alkaline solutions of hydrogen peroxide suitable for domestic use, the inventors found that there was a significant variation in the quality of the resultant product employing seemingly the same stabiliser, depending upon the way in which the stabilized solution was made.

It is the first object of the present invention to locate a new or improved method of incorporating aminopolyalkylenephosphonic acid/salt stabilizers in aqueous alkaline solutions.

It is a second object of the invention to provide aqueous alkaline solutions containing hydrogen peroxide that are intended for general domestic purposes and enjoy enhanced extent of stabilization.

According to the first aspect of the present invention, there is provided a process for the stabilization of dilute mildly alkaline aqueous hydrogen peroxide solutions obtained by diluting and rendering alkaline a concentrated acidic solution of hydrogen peroxide and employing as stabilizer an effective amount of an aminopoly(alkylenephosphonic acid/salt) characterized by the sequential steps of:
i) introducing into a concentrated aqueous acidic solution of hydrogen peroxide the amount of the aminopoly(alkylene phosphonic acid) or salt thereof desired in the dilute product and optionally a proportion of buffer material insufficient to attain the desired alkalinity in the dilute solution produced in step iii),
ii) storing the concentrated hydrogen peroxide solution until the major proportion of the aminopoly(alkylene phosphonic acid) or salt therein has been converted to a derivative, and
iii)diluting the concentrate with sufficient water and the or the remainder of the alkali and/or buffer to attain the dilute mildly alkaline bleach/ disinfectant solution containing the stabilizer at the desired concentration.

Herein by the term aminopoly(alkylene phosphonic acid) is meant a compound containing at least one amine group that is substituted by at least one alkylene phosphonic acid group, -A-PO₃H, the compound being substituted by at least three alkylene phosphonic acid groups in total and when more than one amine group is present, the nitrogen atom of each is linked through an alkylene group, -B-, which may comprise part of a cycloalkylene group. The salt is suitably an alkali or alkaline earth metal salt of at least one of the phosphonic acid groups in the compound. Many suitable amino compounds obey the general formula:- 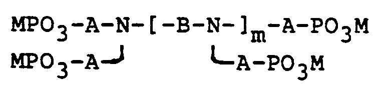
in which M represents H or solubilising cation, m represents an integer from 0 to 3, A represents a methylene group or a polymethylene group containing 2 linear carbon atoms and B represents a methylene group or a polymethylene group containing from 2 to 6 carbon atoms, or a cyclopolymethylene group containing from 4 to 6 carbon atoms.

In preferred embodiments, one or more of the following preferences is employed; the alkylene group -A- is a methylene group; M represents H; m is 1 or 2; the number of linear carbon atoms separating the amino N atoms in -B- is 2, either present as a linear group or, more preferably, within a cyclohexylene group. Specific examples of suitable amino compounds comprise ethylenediaminetetra(methylene phosphonic acid), diethylenetriaminepenta(methylene phosphonic acid), and, particularly, 1,2-cyclo-hexanediaminotetra(methylene phosphonic acid).

It is recognized by the inventors that there are at least two methods of preparing a stabilized aqueous alkaline solution of hydrogen peroxide containing a desired amount of stabiliser. One method, an obvious way in the absence of any alternative desciption, comprises the addition of the desired amount of stabilizer to the mixture of concentrated peroxide, diluent and alkali at the time of production of the dilute solution, ie the dilution and stabilization steps occur simultaneously or at least with no intervening delay. Of course, the inventors also recognized that stabilizer can be included in concentrated hydrogen peroxide solutions to offer a measure of protection during its transportation and storage, so that a product obtained by simple dilution of the concentrated peroxide solution would still retain stabilizer, but of course its concentration would have been reduced pro rata. The concentration of stabilizer needed in a dilute alkaline solution for it to be effective is often similar to or even higher than the concentration of the same stabilizer needed to be effective in a concentrated peroxide solution, so that simple dilution of the stabilized hydrogen peroxide concentrate does not provide enough stabilizer for the alkaline product, if the only or the main consideration had been the stabilization of the concentrate itself.

When different amino(polyalkylene phosphonic acids) or their salts are used in the same method, they do achieve a degree of stabilization which varies of course in accordance with the inherent effectiveness of the stabilizer. Such a difference is superimposed upon differences arising from any change in the method of employing the stabilizer. When the same amount of the same stabilizer was employed using the process of the present invention, it was found that the extent of stabilization was improved relative to the simple introduction of the stabilizer into the dilute alkaline peroxide solution.

The benefit of the invention can be enjoyed in one of two ways, or by a combination of the two. First, if the same amount of stabilizer is retained, the resultant product benefits from a reduced rate of peroxide decomposition, and thus has a longer shelf-life at no additional cost. Secondly, the amount of stabilizer can be reduced to the amount at which the same degree of stabilization is retained, thereby obtaining a product having the same performance, but at a reduced cost. Alternatively, if an intermediate amount of stabilizer is employed, a somewhat improved stability at a somewhat reduced cost can be obtained.

It will be recognized that some variation is possible within the invention process. In one convenient variation, the concentrated hydrogen peroxide solution in which the stabilizer undergoes conversion, contains the hydrogen peroxide and stabilizer in the ratio desired in the dilute product, ie much higher than the ratio needed merely to stabilize the concentrate alone. In another variation, the ratio of stabilizer to hydrogen peroxide is higher in the solution in which stabilizer conversion takes place than in the dilute solution. In this latter variation, the hydrogen peroxide is supplemented in the course of the dilution.

The concentrated hydrogen peroxide solution employed is preferably at least 25% w/w up to 90% w/w and in many practical instances is selected in the range of from 35% to 70% w/w. The concentration that is used is not critical, provided that step i) is allowed to continue for a sufficient period to permit the substantial conversion of the amino stabilizer to take place. In practice, the actual concentration often depends upon factors like the local transportation regulations.

It is preferable that step i) be continued until at least 90% and preferably substantially all the amino stabilizer has been converted, ie to the more effective form that constitutes the basis for the present invention. The rate at which the conversion occurs is dependant upon the storage temperature of the concentrated hydrogen peroxide solution and the concentration of hydrogen peroxide therein. In practice, it is convenient to employ ambient storage conditions, which usually means a temperature in the region of about 10 to 35^{o}C, depending upon the locality and the season of the year. The difference of 25^{o}C between the extremes would result in a detectable difference in the time taken to achieve the same extent of amino stabilizer conversion. As a guidance, substantially complete conversion can be achieved in 35% w/w or stronger hydrogen peroxide within about 7 days at about 20^{o}C and correspondingly 2x longer at about 10^{o}C and about 3x shorter at about 35^{o}C. The conversion can be monitored by analyzing samples withdrawn at suitable intervals, as determined by previous experience, employing conventional ion exchange chromatography, pioneered by Dionex. It is observed that the peak attributable to the amino stabilizer progressively diminishes during the period of step i) and a peak corresponding to the conversion product correspondingly appears and increases. By analyzing the trace obtained, using standard techniques, the conversion can be followed quantitatively as well as qualitatively, and thereby the extent of conversion can be measured. The monitoring can, of course, be employed to determine when step i) can be terminated. It will be understood that the concentrated solutions of peroxide containing the amino stabilizer can be kept longer than the minimum period to achieve subtantially complete conversion of the stabilizer to its more active form and that they can subsequently be diluted and rendered alkaline without any significant impairment in performance.

The amount of aminophosphonic acid stabilizer employed in the present invention is most conveniently expressed for the dilute product, and to some extent the amount selected is at the discretion of the user, there being the usual trade-off as the amount of stabilizer is increased between the benefit of increased stabilization and the correspondingly increased cost. In practice, the concentration of the stabilizer in the alkaline solution is normally selected within the range of from 1 to 20 parts w/w per 1000 parts of alkaline solution. A further factor influencing the prefered amount of stabilizer is the pH of the dilute peroxide solution, the higher the pH, the higher the stabilizer concentration that is preferred.

The dilute alkaline solution normally is formulated to a pH of at least pH8, and usually not higher than pH10.5. In many embodiments, the solution pH is targetted in the range of about pH 8.5 to about pH 9.5. For solutions within that latter range, the stabilizer content is from 2 to 8 parts w/w per 1000 parts of solution. Such solutions, which are intended often for domestic use, often contain between 5 and 8% w/w hydrogen peroxide, as 100%, for example 6%. For purposes of deciding how much stabilizer to incorporate in the concentrated hydrogen peroxide solution before dilution/alkalisation, it is often convenient to express the stabilizer and hydrogen peroxide as a w/w ratio. A particularly suitable ratio range comprises from 7.5 to 30 parts of hydrogen peroxide w/w per part by weight of stabilizer, and in many instances from 10 to 20 parts per part on the same basis.

In practice, the alkaline solution is obtained at least in part, by mixing an alkali, such an alkali metal hydroxide or its equivalent in aqueous solution with the concentrated peroxide solution. The alkalinity is preferably maintained by a buffer system. Two readily available buffer systems are based upon respectively alkali metal/hydrogen pyrophosphate and alkali metal/hydrogen carbonate, in both cases the alkali metal being most conveniently sodium. A convenient concentration for the buffer is often at least 0.1%, from 0.2% to 5% w/w of the dilute solution. In some instances is from 1 to 3% w/w of the dilute solution, depending upon the choice of buffer. When a buffer system is used, it is more convenient for it to supply a proportion of the alkalinity in the dilute solution and the remainder to be provided by a soluble alkali/alkaline metal hydroxide, such as sodium hydroxide.

It has been found that in one especially effective method of producing stabilized peroxide solutions, at least part of the buffer system is incorporated into the concentrated peroxide solution prior to storage and dilution, for example using sodium carbonate and/or bicarbonate or other alkali metal carbonate. By so doing, the pH of the concentrated solution is increased, but normally not to above approximately neutral, and beneficially to within the range of PH5 to pH7. After the storage period and hence after conversion of the amino phosphonic acid, the remaining alkalinity is introduced. For convenience, all this remaining alkalinity preferably comprises an alkali metal hydroxide.

The instant compositions can also include sodium silicate to provide at least a part of the alkalinity. The amount of silicate contemplated is low, for example between about 0.03 to about 0.5% of the solution. Addition of such an amount of silicate has been found to increase the instant stability of the invention compositions. A convenient sodium silicate to employ has a ratio of Si:Na in the range of about 1.5:1 to 4;1, such as about 3:1.

It will be recognized that when the concentrated hydrogen peroxide solution provides all the peroxide and all the stabilizer, the weight ratio of the two components is the same as in the dilute solution. Thus, the concentration of stabilizer introduced into the 35 w/w hydrogen peroxide solution is preferably from about 8.5 to about 55 g/l and in many instances from 17.5 to 35 g/l. Pro rata higher concentration ranges apply if even higher concentrations of hydrogen peroxide are used, such as the grades of about 50% w/w and 65-70% w/w.

The concentrated hydrogen peroxide solution into which the aminophosphonic acid stabilizer is introduced can also contain one or more other peroxide stabilisers, such as those which customarily have been present in various technical grades of hydrogen peroxide to stabilize the solution during transportation and storage or to passivate metal surfaces into which it may come in contact. Such other stabilisers or passivators include phosphoric and nitric acid, each typically being present in amounts in the range of from 25 to 250 mg/l solution.

Having described the invention in geral terms, specific embodiments of the invention will now be described more fully by way of example only.

### Comparison 1

In this Comparison, in stage 1, a technical grade of hydrogen peroxide (35% w/w containing about 146 mg/l phosphoric acid) was diluted to 5% hydrogen peroxide, stabilized by the introduction of 37 g/l of a solution of diethylenetriamine penta(methylene phosphonic acid), DTPMP, (about 52% active, ie 20 g/l active ingredient). In stage 2, the concentrated solution of stage 1 was diluted and rendered alkaline to pH 9.63 with addition of demineralised water, sodium hydroxide and sodium pyrophosphate (20 g/l). The dilute solution contained 1.9 gpl DTPMP. The overall process of stabilizing, diluting and rendering alkaline took less than an hour.

The stability of the solution was then tested immediatedly by a standard procedure in which 25 ml samples were heated to 100^{o}C and the amount of oxygen gas evolved by decomposition of the hydrogen peroxide was measured using a manometer that was kept at laboratory ambient atmospheric temperature, ie about 23^{o}C.

The product had a gassing rate of about 0.72 ml per min per 25 ml, an average of 4 samples.

### Comparison 2

In this comparison, Comparison 1 was repeated but using the same active amount of a different stabilizer, cyclohexane-1,2-diaminetetra(methylene phosphonic acid, CDTMP, instead of DTPMP. The product had a pH of 9.76 and an average gassing rate of 0.67 ml per min per 25 ml.

### Comparison 3

In this comparison, Comparison 1 was repeated but the hydrogen peroxide content was increased to 6% w/w, with the same content of stabilizer, 1.9 gpl in the dilute solution, which had pH 9.0. It had an average gassing rate of 0.31 ml per min per 25 ml.

### Comparison 4

In this comparison, Comparison 2 was repeated but the hydrogen peroxide content was increased to 6% w/w, with the same content of stabilizer, 1.9 gpl in the dilute solution, which had pH 8.96. It had an average gassing rate of 0.25 ml per min per 25 ml.

### Example 5

In this Example, the first stage of comparison 3 was followed, thereby producing a 35% w/w hydrogen peroxide solution containing 11.1 gpl DTPMP, and a separate solution of phosphate and sodium hydroxide dilute aqueous alkaline solution of sodium pyrophosphate and sodium hydroxide was also produced. After storage for a week at ambient temperature, the concentrated peroxide solution was diluted to 6% hydrogen peroxide, and rendered alkaline in the second stage, to pH 9.01. The resultant gassing rate was measured at an average of 0.29 ml per min per 25 ml.

### Example 6

In this Example, the first stage of comparison 4 was followed, thereby producing a 35% w/w hydrogen peroxide solution containing 11.1 gpl CDTMP, and a separate dilute aqueous alkaline solution of sodium pyrophosphate and sodium hydroxide was produced as in comparison 4. After storage for a week at ambient temperature, the concentrated peroxide solution was diluted to 6% hydrogen peroxide, and rendered alkaline in the second stage, pH 9.07. The resultant gassing rate measured was an average of 0.24 ml per min per 25 ml.

### Example 7

In this Example, Example 6 was repeated. The resultant solution had a pH of 9.08 and an average gassing rate of 0.15 ml per min per 25 ml.

### Example 8

In this Example, Example 5 was repeated but substituting 2 g/l sodium bicarbonate for sodium pyrophosphate as the alkaline buffer. The resultant solution had a pH of 9.03 and an average gassing rate of 0.20 ml per min per 25 ml.

### Example 9

In this Example, Example 8 was repeated, but modified by diluting the hydrogen peroxide concentration to approximately 6% w/w in the solution that was subsequently stored for a week before it was rendered alkaline in the second stage. The resultant solution had a pH of 8.99 and an average gassing rate of 0.14 ml per min per 25 ml.

### Example 10

In this Example, Example 8 was repeated, but modified by incorporating the buffer (not the alkali) in the 35% w/w hydrogen peroxide solution that was stored for a week before it was diluted and rendered alkaline. The resultant dilute solution had a pH of 9.0 and an average gassing rate of 0.05 ml per min per 25 ml.

A similar proportionate improvement in stabilisation of the dilute hydrogen peroxide solution arises, but from a more stable starting point if the foregoing Comparisons and Examples are repeated, but employing about 2.2gpl CDTMPA stabilizer in the dilute (6% w/w) hydrogen peroxide solution instead of the concentration of about 1.7gpl present in the Examples. Likewise, the stability of the hydrogen peroxide has been found to be retained when the alkalinity was provided in part by the presence of sodium silicate (Na₂O : SiO₂ ratio of 3.3:1) at concentrations of from 0.5 to 2.6 gpl.

## Claims

1. A process for the stabilization of dilute mildly alkaline aqueous hydrogen peroxide solutions obtained by diluting and rendering alkaline a concentrated acidic solution of hydrogen peroxide and employing as stabilizer an effective amount of an aminopoly(alkylenephosphonic acid/salt) characterized by the sequential steps of:
i) introducing into a concentrated aqueous acidic solution of hydrogen peroxide the amount of the aminopoly(alkylene phosphonic acid) or salt thereof desired in the dilute product and optionally a proportion of buffer material insufficient to attain the desired alkalinity in the dilute solution produced in step iii),
ii) storing the concentrated hydrogen peroxide solution until the major proportion of the aminopoly(alkylene phosphonic acid) or salt therein has been converted to a derivative, and
iii) diluting the concentrate with sufficient water and the or the remainder of the alkali and/or buffer to attain the dilute mildly alkaline bleach/disinfectant solution containing the stabiliser at the desired concentration.

2. A process according to claim 1 characterized in that the aminopoly(alkylene phosphonic acid) comprises cyclohexane-1,2-diamino-tetrakis(methylene phosphonic acid) or a salt thereof.

3. A process according to either preceding claim characterized in that the concentrated hydrogen peroxide solution contains from 35 to 70% w/w hydrogen peroxide.

4. A process according to any prceding claim characterized in that the dilute hydrogen peroxide solution obtained from step iii) contains from 5 to 8% w/w hydrogen peroxide.

5. A process acording to any preceding claim characterized in that the dilute hydrogen peroxide solution obtained in step iii) has a pH in the range of about 8.5 to about 9.5.

6. A process according to any preceding claim characterized in that sufficient buffer is incorporated into the hydrogen peroxide solution in step i) to generate a pH in the range of from pH5 to pH7.

7. A process according to any preceding claim characterized in that the buffer is selected from alkali metal/hydrogen phosphates and alkali metal/hydrogen carbonates.

8. A process according to claim 7 characterized in that the alkali metal is sodium.

9. A process according to any preceding claim characterized in that the dilute hydrogen peroxide solution contains 2 to 8 parts w/w stabiliser per 1000 parts of solution.

## Patentansprüche

1. Ein Verfahren zur Stabilisierung verdünnter, mild basischer, wässeriger Lösungen von Wasserstoffperoxid, die durch Verdünnen und Anlaugen einer konzentrierten sauren Lösung von Wasserstoffperoxid erhalten worden sind, wobei als Stabilisator eine wirksame Menge an einem Aminopoly(alkylenphosphonsäure/-salz) dient, gekennzeichnet durch die nachstehenden, nacheinander durchzuführenden Schritte:
i) Das Eintragen einer, der erwünschten Konzentration in der verdünnten Lösung entsprechenden Menge der Aminopoly(alkylenphosphonsäure) oder eines ihrer Salze in eine konzentrierte wässerige saure Wasserstoffperoxidlösung sowie fakultativ einer Puffersubstanz in einer Menge, die nicht zur Erzeugung der gewünschten Basizität der in Schritt (iii) gebildeten, verdünnten Lösung genügt,
ii) Das Aufbewahren der konzentrierten Wasserstoffperoxidlösung, bis der grösste Teil der darin enthaltenen Aminopoly(alkylenphosphonsäure), bzw. des korrespondierenden Salzes, zu einem Derivat umgesetzt worden ist, und
iii) Das Verdünnen des Konzentrats mit genügend Wasser und mit Base und/oder Puffersubstanz oder mit restlicher Base und/oder Puffersubstanz, um die verdünnte, mild alkalische Bleich- bzw. Desinfektionslösung, die den Stabilisator in der gewünschten Konzentration enthält, zu erhalten.

2. Ein Verfahren nach Anspruch 1, dadurch gekennzeichnet, dass als Aminopoly(alkylenphosphonsäure)-Komponente Cyclohexan-1,2-diamino-tetrakis(methylenphosphonsäure) oder eines ihrer korrespondierenden Salze verwendet wird.

3. Ein Verfahren nach einem der vorhergehenden Ansprüche, dadurch gekennzeichnet, dass die konzentrierte Wasserstoffperoxidlösung zwischen 35 und 70 Gewichtsprozente Wasserstoffperoxid enthält.

4. Ein Verfahren nach einem der vorhergehenden Ansprüche, dadurch gekennzeichnet, dass die in Schritt (iii) erhaltene, verdünnte Wasserstoffperoxidlösung zwischen 5 und 8 Gewichtsprozente Wasserstoffperoxid enthält.

5. Ein Verfahren nach einem der vorhergehenden Ansprüche, dadurch gekennzeichnet, dass die in Schritt (iii) erhaltene, verdünnte Wasserstoffperoxidlösung einen pH-Wert zwischen 8,5 und 9,5 aufweist.

6. Ein Verfahren nach einem der vorhergehenden Ansprüche, dadurch gekennzeichnet, dass in Schritt (i) ausreichend Puffersubstanz in die Wasserstoffperoxidlösung eingetragen wird, um einen pH-Wert zwischen pH=5 und pH=7 einzustellen.

7. Ein Verfahren nach einem der vorhergehenden Ansprüche, dadurch gekennzeichnet, dass die Puffersubstanz ausgewählt wird aus sauren Alkalimetallphosphaten oder Alkalimetallhydrogencarbonaten.

8. Ein Verfahren nach Anspruch 7, dadurch gekennzeichnet, dass das Alkalimetall Natrium ist.

9. Ein Verfahren nach einem der vorhergehenden Ansprüche, dadurch gekennzeichnet, dass die verdünnte Wasserstoffperoxidlösung auf 1000 Gewichtsteile Lösung zwischen 2 und 8 Gewichtsteile Stabilisator enthält.

## Revendications

1. Procédé pour la stabilisation de solutions aqueuses diluées, légèrement alcalines, de peroxyde d'hydrogène, obtenues par dilution et par alcalinisation d'une solution concentrée acide de peroxyde d'hydrogène et par utilisation comme stabilisateur d'une quantité efficaced'un aminopoly(acide/sel alkylènephosphonique), caractérisé par les étapes consécutives suivantes :
i) l'introduction, dans une solution aqueuse concentrée, acide, de peroxyde d'hydrogène, de la quantité de l'aminopoly(acide alkylènephosphonique), ou de son sel, souhaitée dans le produit dilué et, facultativement, une proportion de tampon, insuffisante pour atteindre l'alcalinité recherchée dans la solution diluée, produite à l'étape iii),
ii) le stockage de la solution concentrée de peroxyde d'hydrogène jusqu'au moment où la majeure partie de l'aminopoly(acide alkylènephosphonique), ou de son sel, a été transformée en un dérivé, et
iii) la dilution de la solution concentrée avec assez d'eau et le, ou le reste du, métal alcalin et/ou tampon, pour obtenir la solution de blanchiment/désinfection diluée, légèrement alcaline, contenant le stabilisateur à la concentration souhaitée.

2. Procédé selon la revendication 1, caractérisé en ce que l'aminopoly(acide alkylènephosphonique) comprend le cyclohexane-1,2-diamino- tétrakis(acide méthylènephosphonique) ou un de ses sels.

3. Procédé selon l'une quelconque des revendications précédentes, caractérisé en ce que la solution concentrée de peroxyde d'hydrogène contient de 35 à 70 % en poids (masse/masse) de peroxyde d'hydrogène.

4. Procédé selon l'une quelconque des revendications précédentes, caractérisé en ce que la solution diluée de peroxyde d'hydrogène, obtenue à l'étape iii), contient de 5 à 8 % en poids (masse/masse) de peroxyde d'hydrogène.

5. Procédé selon l'une quelconque des revendications précédentes, caractérisé en ce que la solution diluée de peroxyde d'hydrogène, obtenue à l'étape iii), présente un pH compris dans la gamme d'environ 8,5 à environ 9,5.

6. Procédé selon l'une quelconque des revendications précédentes, caractérisé en ce qu'une quantité suffisante de tampon est introduite dans la solution de peroxyde d'hydrogène à l'étape i), pour engendrer un pH compris dans la gamme de pH 5 à pH 7.

7. Procédé selon l'une quelconque des revendications précédentes, caractérisé en ce que le tampon est choisi parmi les phosphates de métal alcalin/hydrogène et les carbonates de métal alcalin/hydrogène.

8. Procédé selon la revendication 7, caractérisé en ce que le métal alcalin est le sodium.

9. Procédé selon l'une quelconque des revendications précédentes, caractérisé en ce que la solution diluée de peroxyde d'hydrogène contient de 2 à 8 parts en poids (masse/masse) de stabilisateur par 1000 parts de solution.
